# EUROPEAN PATENT APPLICATION

(11) **EP 4 711 112 A1**
(43) Date of publication of application: **18.03.2026**
(21) Application number: 24200863.9
(22) Date of filing: 17.09.2024
(51) Int. Cl.: B29C 33/00, B29C 33/76, B29C 43/40, A61J 11/00, A61J 11/02, B29C 43/02, B29K 83/00, B29C 51/08

(54) **TEAT AND METHOD FOR MANUFACTURING THE SAME**

(71) Applicant: Koninklijke Philips N.V., 5656 AG Eindhoven (NL)
(72) Inventor: GOSENSHUIS, Daan Hendrik, Eindhoven (NL); DE VRIES, Sietse Bart, Eindhoven (NL); KAMPING, Wiecher Ferdinand, Eindhoven (NL)
(74) Representative: Philips Intellectual Property & Standards

(57) **Abstract**

Provided is a teat (10), and a method for manufacturing the teat (10). The teat (10) includes a teat wall (12). The teat wall (12) has an interior surface (14) and an exterior surface (16). The interior surface (14) at least partly delimits a teat volume (24) in which liquid is receivable. A recess (26) is defined in the teat wall (12). The recess (26) is at least partly delimited by a concavely curving surface (27). An air inlet opening (20) is punched through the teat wall (12) by the teat wall (12) and an end of an implement (29) being forced together, while the implement (29) occupies the recess so that the end of the implement (29) contacts the concavely curving surface (27). Further provided is a computer program for implementing at least part of the method, and a processor configured to execute the computer program. Additionally provided is a teat fabrication apparatus for manufacturing the teat (10).

## Description

### FIELD OF THE INVENTION

The invention relates to a method for manufacturing a teat, e.g. a teat for an infant feeding system. The invention also relates to the teat as such.

The invention further relates to a computer program for implementing at least part of the method, and to a processor configured to execute the computer program.

The invention yet further relates to a teat fabrication apparatus for manufacturing the teat.

### BACKGROUND OF THE INVENTION

Feeding containers often include an air inlet opening for permitting air to enter the container while a user, e.g. an infant, is feeding from the container via a teat. This may permit the infant to continuously drink from the container without needing to release suction the infant is applying to the teat. In doing so, an amount of air ingested by the infant whilst feeding from the container may be reduced, thereby reducing the risk of the infant suffering from colic. The air inlet is often included in the teat itself, which is typically a soft flexible component which may be detached from the container.

The air inlet opening may be included in a valve, e.g. an anti-colic valve, included in the teat. A common type of valve for this purpose is a duckbill valve, having two flaps which almost touch and permit air to enter the container when pressure in the container is below a certain level. When the teat is molded, components, e.g. flaps, of the valve are often molded as part of the teat itself.

After molding, a second manufacturing step tends to be needed to create the air inlet opening, e.g. in the form of a slit between two flaps of the valve, using a blade. Although this slitting step can be automated, this process is sensitive to misalignment of the blade, which can result in cuts in the sidewalls of the valve. Alternatively, the process can be a manual process, however this is also sensitive to misalignment and can be costly and time consuming.

An alternative solution to the duckbill valve is to simply provide a small hole through part of the wall of the teat. While this can be more cost effective than a duckbill valve, such a hole can be incorrectly formed, which can risk that not enough air is able to enter the container, or that the liquid leaks through the hole.

### SUMMARY OF THE INVENTION

The invention is defined by the claims.

According to examples in accordance with a first aspect of the invention, there is provided a method for manufacturing a teat, the teat comprising a teat wall that comprises an interior surface and an exterior surface, the interior surface at least partly delimiting a teat volume in which liquid is receivable, wherein the method comprises: molding the teat wall using a mold, a recess being defined in the teat wall during the molding, the recess being at least partly delimited by a concavely curving surface, wherein an implement occupies the recess so that an end of the implement contacts the concavely curving surface; and forcing the teat wall and the end of the implement together, while the implement occupies the recess, to punch an air inlet opening through the teat wall.

Punching the air inlet opening through the teat wall in this manner has been found to be an advantageous way of providing the air inlet opening, for example because the risk of the air inlet opening being positioned incorrectly may be reduced. This is because the concavely curving surface may effectively guide/determine the location at which the air inlet opening is punched using the end of the implement.

It is noted that a liquid outlet of the teat, provided in addition to the air inlet opening, can allow an infant to withdraw liquid, e.g. milk, received in the teat volume.

In some embodiments, the implement is included in the mold, with the recess being formed by the implement during the molding. In this way, the same tooling, in other words the implement-comprising mold, may be used to form the teat wall and to form the air inlet opening. This may simplify the manufacturing process.

In some embodiments, the implement comprises a convexly curving tip, e.g. a convexly curving tip whose shape complements that of the concavely curving surface. Such a convexly curving tip may assist to minimize or prevent wear of the implement arising from repeated use of the implement to punch the air inlet opening through a number of teat walls.

A radius of curvature of one or both of the end of the implement and the concavely curving surface may be at least 0.05 mm. Such a minimum radius of curvature of 0.05 mm of the end, e.g. convexly curving tip, of the implement may reduce the likelihood of damage to the implement whilst punching the air inlet opening.

Alternatively or additionally, the radius of curvature of one or both of the end of the implement and the concavely curving surface may be 0.3 mm or less. Such a maximum radius of curvature of 0.3 mm of the end, e.g. convexly curving tip, of the implement may assist to ensure that the end of the implement can efficiently punch the air inlet opening through the teat wall.

The radius of curvature of the end, e.g. convexly curving tip, of the implement may, for example, be in the range of 0.05 mm to 0.3 mm, for example in the range of 0.1 mm to 0.25 mm, such as in the range of 0.1 mm to 0.2 mm. For example, the radius of curvature of the end, e.g. convexly curving tip, of the implement may be about 0.15 mm.

The forcing of the teat wall and the end of the implement together may be implemented in any suitable manner. In some embodiments, the forcing comprises compressing the teat wall between the end of the implement and a counter-surface. In this way, the air inlet opening may be punched through the teat wall in a relatively controlled manner.

In such embodiments, the forcing may comprise moving the counter-surface against the teat wall while the implement is occupying the recess, e.g. while the implement is static while occupying the recess.

In some embodiments, the method comprises separating the teat wall and at least part of the mold from each other after the air inlet opening has been punched through the teat wall. The separating can, for example, comprise using a demolding tool, with the counter-surface being included in the demolding tool.

Such a demolding tool can provide a particularly convenient way of implementing the punching of the air inlet opening, and the subsequent separating of the teat wall and the at least part of the mold from each other.

The teat wall may comprise an elastomeric material. The recess and the air inlet opening can be favorably provided via molding and punching such an elastomeric material.

In at least some embodiments, the elastomeric material comprises silicone. Thus, the teat wall may comprise silicone.

In some embodiments, the method comprises using a processor to control a drive system to cause the teat wall and the end of the implement to be forced together, while the implement occupies the recess, to punch the air inlet opening through the teat wall.

In such embodiments, the processor may, for example, control a dispensing system to dispense material that forms the teat wall in the mold during the molding. Thus, the processor can control the dispensing of the material, and the subsequent forcing of the molded teat wall and the end of the implement together to punch the air inlet opening through the teat wall.

In some embodiments, the processor controls a release system to separate the molded teat wall from at least part of the mold after the air inlet opening has been punched through the teat wall.

Thus, the processor can control the forcing of the molded teat wall and the end of the implement together to punch the air inlet opening through the teat wall, and the subsequent separation of the molded teat wall from the at least part of the mold. The processor may, for example, additionally control the dispensing of the material that forms the teat wall in the mold during the molding.

According to a examples in accordance with a second aspect, there is provided a teat comprising a molded teat wall that comprises an interior surface and an exterior surface, the interior surface at least partly delimiting a teat volume in which liquid is receivable, a recess being defined in the molded teat wall, the recess being at least partly delimited by a concavely curving surface, wherein an air inlet opening is punched through the molded teat wall by the teat wall and the end of an implement being forced together, while the implement occupies the recess so that the end of the implement contacts the concavely curving surface.

The teat may be obtainable by the method according to any of the embodiments described herein.

A radius of curvature of the concavely curving surface may be at least 0.05 mm. Alternatively or additionally, the radius of curvature of the concavely curving surface may be 0.3 mm or less.

The radius of curvature of the concavely curving surface may, for example, be in the range of 0.05 mm to 0.3 mm, for example in the range of 0.1 mm to 0.25 mm, such as in the range of 0.1 mm to 0.2 mm. For example, the radius of curvature of the concavely curving surface may be about 0.15 mm.

Alternatively or additionally, the teat wall may comprise an elastomeric material, for example silicone. The recess and the air inlet opening can be favorably provided via molding and punching such an elastomeric material, e.g. silicone.

According to examples in accordance with a third aspect, there is provided an infant feeding system comprising a feeding container and the teat according to any of the embodiments described herein.

The teat may be securable to the feeding container, e.g. using an attachment device also included in the infant feeding system, to enable an infant to consume liquid in the feeding container by sucking the teat.

In this respect, liquid may be received in the teat volume from the feeding container, and the infant may withdraw the liquid in the teat volume, e.g. via the liquid opening.

According to examples in accordance with a fourth aspect, there is provided a computer program comprising computer-readable instructions executable to cause a processor to control a drive system to force a teat wall and an end of an implement together, while the implement occupies a recess defined in the teat wall, to punch an air inlet opening through the teat wall, the recess being at least partly delimited by a concavely curving surface that is contacted by the end of the implement during the forcing.

In some embodiments, the computer-readable instructions are executable to cause the processor to control a dispensing system to dispense material that forms the teat wall in a mold during molding of the teat wall.

Alternatively or additionally, the computer-readable instructions are executable to cause the processor to control a release system to separate the molded teat wall from at least part of the mold after the air inlet opening has been punched through the teat wall.

According to examples in accordance with a fifth aspect, there is provided a processor configured to execute the computer program according to any of the embodiments described herein.

According to examples in accordance with a sixth aspect, there is provided a teat fabrication apparatus for manufacturing a teat, the teat comprising a teat wall that comprises an interior surface and an exterior surface, the interior surface at least partly delimiting a teat volume in which liquid is receivable, wherein the teat fabrication apparatus comprises: a mold in which the teat wall is moldable, the mold being configured to define a recess in the teat wall during molding, the recess being at least partly delimited by a concavely curving surface; wherein an implement is arranged to occupy the recess so that an end of the implement contacts the concavely curving surface, the implement being configured to enable an air inlet opening to be punched through the teat wall by forcing, while the implement occupies the recess, the teat wall and the end of the implement together.

In some embodiments, the teat fabrication apparatus comprises a drive system for forcing the teat wall and the end of the implement together, while the implement occupies the recess defined in the teat wall, to punch the air inlet opening through the teat wall.

The drive system may be controllable by a processor, e.g. the processor described above in relation to the fifth aspect, to force the teat wall and the end of the implement together, while the implement occupies the recess defined in the teat wall, to punch the air inlet opening through the teat wall.

Alternatively or additionally, the teat fabrication apparatus may comprise a dispensing system for dispensing material that forms the teat wall in the mold during molding of the teat wall.

The dispensing system may be controllable by a processor, e.g. the processor described above in relation to the fifth aspect, to dispense material that forms the teat wall in the mold during molding of the teat wall.

Alternatively or additionally, the teat fabrication apparatus may comprise a release system for separating the molded teat wall from at least part of the mold after the air inlet opening has been punched through the teat wall.

The release system may be controllable by a processor, e.g. the processor described above in relation to the fifth aspect, to separate the molded teat wall from the at least part of the mold after the air inlet opening has been punched through the teat wall.

The processor described in any of these embodiments of the teat fabrication apparatus can itself be included in the teat fabrication apparatus.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 shows a cross-section of a teat for a feeding container according to an example;
FIG. 2 provides an enlarged view of part of the teat shown in FIG. 1;
FIGs. 3A to 3D schematically depict steps of a method of manufacturing a teat according to an example; and
FIG. 4 provides a flow diagram of a method of manufacturing a teat according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a teat, and a method for manufacturing the teat. The teat includes a teat wall. The teat wall has an interior surface and an exterior surface. The interior surface at least partly delimits a teat volume in which liquid is receivable. A recess is defined in the teat wall. The recess is at least partly delimited by a concavely curving surface. An air inlet opening is punched through the teat wall by the teat wall and an end of an implement being forced together, while the implement occupies the recess so that the end of the implement contacts the concavely curving surface. Further provided is a computer program for implementing at least part of the method, and a processor configured to execute the computer program. Additionally provided is a teat fabrication apparatus for manufacturing the teat.

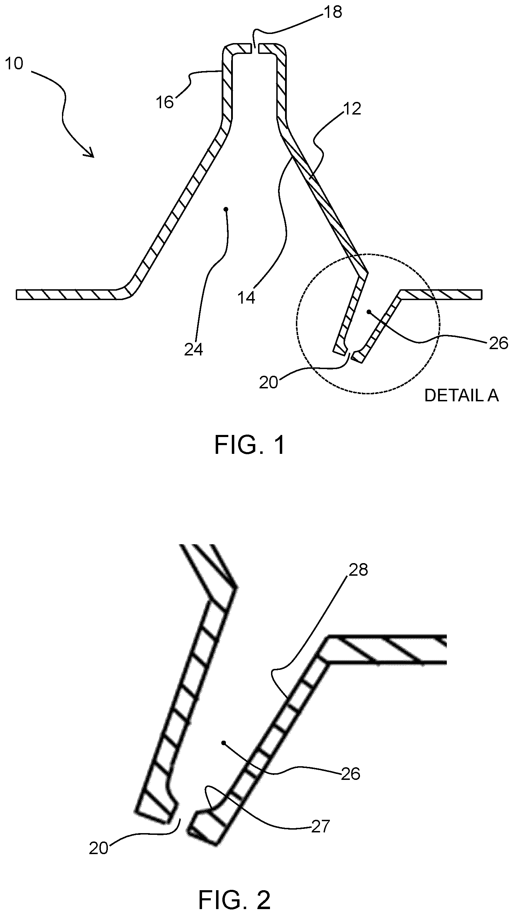

FIG. 1 provides a cross-sectional view of a teat 10 according to an example. The present disclosure relates, in part, to the teat 10 as such, since the teat 10 can be supplied to a consumer by itself, and may be used in combination with a feeding container (not visible) sourced by the consumer separately from the teat 10, or already in the consumer's possession.

The present disclosure also relates to an infant feeding system comprising the feeding container and the teat 10. Thus, the consumer, e.g. the infant's parent or caregiver, can conveniently be supplied with the teat 10 together with the feeding container.

The teat 10 may be securable to the feeding container, e.g. using an attachment device also included in the infant feeding system, to enable an infant to consume liquid in the feeding container by sucking the teat 10.

As shown in FIG. 1, the teat 10 comprises a teat wall 12, with the teat wall 12 comprising an interior surface 14 and an exterior surface 16. A liquid outlet 18 of the teat 10 can allow an infant to withdraw liquid, e.g. milk, therethrough during feeding using the infant feeding system.

The teat 10 comprises an air inlet opening 20 for allowing air to enter the infant feeding system. This may permit the infant to continuously feed without needing to release suction they are applying to the teat 10. An amount of air ingested by the infant whilst feeding may be reduced, thereby reducing the risk of the infant suffering from colic. The present disclosure generally concerns the manner in which the air inlet opening 20 is provided.

As shown in FIG. 1, the interior surface 14 of the teat wall 12 at least partly delimits a teat volume 24 in which liquid is receivable, for example from the feeding container. The air inlet opening 20 may be arranged to admit air from outside the teat volume 24 into an internal volume of the infant feeding system.

The internal volume of the infant feeding system can comprise, for example, a container volume of the feeding container and the teat volume 24.

The teat wall 12 can be formed of any suitable material. Particular mention is made of the teat wall 12 comprising an elastomeric material, such as silicone, since such an elastomeric material may be apposite for forming, e.g. molding, the teat wall 12, and also for enabling the air inlet opening 20 to be punched through the teat wall 12, as explained in more detail herein below.

FIG. 2 provides an enlarged view of a part of the teat 10 shown in FIG. 1, namely the part denoted by "DETAIL A". As best shown in FIG. 2, a recess 26 is defined in the teat wall 12, with the recess 26 being at least partly delimited by a concavely curving surface 27.

It is noted that the recess 26 may be a recess 26 in the exterior surface 16 of the teat wall 12.

Alternatively or additionally, the teat wall 12 may be thinner where the recess 26 is defined than in region(s) of the teat wall 12 adjacent to the recess 26.

The concavely curving surface 27 may delimit at least an end portion of the recess 26. In some embodiments, such as that shown in FIGs. 1 and 2, a first, e.g. non-curved, surface portion 28 may extend from a mouth of the recess 26 to reach the concavely curving surface 27 delimiting the end portion of the recess 26.

The surface portion 28 is, for example, a conical or pyramidal surface portion 28, with the concavely curving surface 27 providing a rounded end, rather than an apex, of the conical or pyramidal surface portion 28.

A radius of curvature of the concavely curving surface 27 may be at least 0.05 mm. Alternatively or additionally, the radius of curvature of the concavely curving surface 27 may be 0.3 mm or less. These minimum and maximum radii of curvature of the concavely curving surface 27 may be associated with enhanced defining of the air inlet opening 20 in the teat wall 12, as further explained herein below.

The radius of curvature of the concavely curving surface 27 may, for example, be in the range of 0.05 mm to 0.3 mm, for example in the range of 0.1 mm to 0.25 mm, such as in the range of 0.1 mm to 0.2 mm. For example, the radius of curvature of the concavely curving surface 27 may be about 0.15 mm.

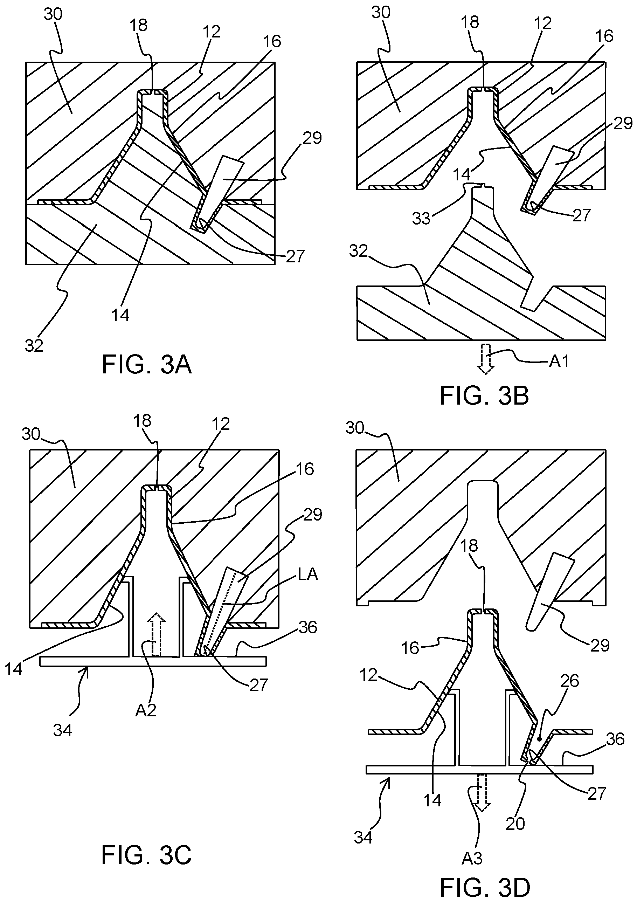

Referring now to FIGs. 3A to 3D, the air inlet opening 20 is punched through the teat wall 12 by the teat wall 12 and an end of an implement 29 being forced together, while the implement 29 occupies the recess 26 so that the end of the implement 29 contacts the concavely curving surface 27.

This has been found to be an advantageous way of providing the air inlet opening 20, for example because the risk of the air inlet opening 20 being positioned incorrectly may be reduced. This is because the concavely curving surface 27 may effectively guide/determine the location at which the air inlet opening 20 is punched using the end of the implement 29.

FIGs. 3A to 3D schematically depict molding the teat wall 12 using a mold 30, 32. For example, the molding of the teat wall 12 comprises injection molding of the teat wall 12.

A dispensing system may dispense material, e.g. molten material or liquid precursor material, that forms the teat wall 12 in the mold 30, 32 during the molding.

In some embodiments, and still referring to FIGs. 3A to 3D, the mold 30, 32 comprises a first part 30, e.g. an outer part, that at least partly defines the teat wall's 12 exterior surface 16 during the molding. The mold 30, 32 may also include a second part 32, e.g. an inner part, that at least partly defines the teat wall's 12 interior surface 14 during the molding.

It is noted that the liquid outlet 18 may be defined by the mold 30, 32. To this end, a protrusion 33 can be included in the mold 30, 32, e.g. in the second part 32, to define the liquid outlet 18.

The molded teat wall 12 may, for example, be supported by the first part 30 of the mold 30, 32 during the forcing of the teat wall 12 and the end of the implement 29 together to punch the air inlet opening 20 through the teat wall 12 (see FIG. 3C).

Following molding of the teat wall 12, the first part 30 and the second part 32 can be separated from each other to allow access to the molded teat wall 12. In the non-limiting example shown in FIGs. 3A to 3D, the second part 32 is moved away from the first part 30 (see arrow A1 in FIG. 3B).

In some embodiments, and referring to FIGs. 3C and 3D, the teat wall 12 and at least part of the mold 30, 32, e.g. the first part 30, may be separated from each other after the air inlet opening 20 has been punched through the teat wall 12. The separating can, for example, comprise using a demolding tool 34.

When the teat wall 12 is molded using a mold 30, 32, the implement 29 may be included in the mold 30, 32, with the recess 26 being formed by the implement 29 during the molding. In other words, the implement 29 may be in the form of a mold pin for forming the recess 26.

Thus, the same tooling, in other words the implement-comprising mold 30, 32, may be used to form the teat wall 12 and to form the air inlet opening 20. This may simplify the manufacturing process. For example, and as shown in FIGs. 3A to 3D, the implement 29 may be included in the first part 30 of the mold 30, 32 that defines the teat wall's 12 exterior surface 16 during the molding.

Alternatively or in addition to the implement 29 being included in the mold 30, 32, the implement 29 may comprise a convexly curving tip, e.g. a convexly curving tip whose shape complements that of the concavely curving surface 27. Such a convexly curving tip may assist to minimize or prevent wear of the implement 29 arising from repeated use of the implement 29 to punch the air inlet opening 20 through a number of teat walls 12.

A radius of curvature of the end of the implement 29, e.g. the convexly curving tip, may be at least 0.05 mm. Such a minimum radius of curvature may reduce the likelihood of damage to the implement 29 whilst punching the air inlet opening 20.

Alternatively or additionally, the radius of curvature of the end, e.g. the convexly curving tip, of the implement 29 may be 0.3 mm or less. Such a maximum radius of curvature may assist to ensure that the end of the implement 29 can efficiently punch the air inlet opening 20 through the teat wall 12.

The radius of curvature of the end, e.g. convexly curving tip, of the implement 29 may, for example, be in the range of 0.05 mm to 0.3 mm, for example in the range of 0.1 mm to 0.25 mm, such as in the range of 0.1 mm to 0.2 mm. For example, the radius of curvature of the end, e.g. convexly curving tip, of the implement 29 may be about 0.15 mm.

Regarding punching of the air inlet opening 20 through the teat wall 12, the forcing of the teat wall 12 and the end of the implement 29 together, while the implement 29 occupies the recess 26 so as to contact the concavely curving surface 27, may comprise compressing the teat wall 12 between the end of the implement 29 and a counter-surface 36. In this way, the air inlet opening 20 may be punched through the teat wall 12 in a relatively controlled manner.

A longitudinal axis LA of the implement 29, which longitudinal axis LA extends along a length of the implement 29 and through a center of the implement 29, may be arranged normal to the counter-surface 36, or at an angle with respect to a notional line drawn normal to the counter-surface 36 (as shown in FIG. 3C).

In some embodiments, the forcing comprises moving the counter-surface 36 against the teat wall 12 (see arrow A2 in FIG. 3C) while the implement 29 is occupying the recess 26, e.g. while the implement 29 is static while occupying the recess 26.

The counter-surface 36 can be provided in any suitable manner. In some embodiments, such as that shown in FIGs. 3A to 3D, the counter-surface 36 is included in the demolding tool 34. Such a demolding tool 34 can provide a particularly convenient way of implementing the punching of the air inlet opening 20, and the subsequent separating of the teat wall 12 and the at least part of the mold 30, 32, e.g. the first part 30, from each other (see arrow A3 in FIG. 3D).

It is noted that the forcing of the teat wall 12 and the end of the implement 29 together to punch the air inlet opening 20 may be implemented subsequently to separation of the first part 30 and the second part 32 of the mold 30, 32 from each other to allow access to the molded teat wall 12.

In some embodiments, a drive system may cause the teat wall 12 and the end of the implement 29 to be forced together, while the implement 29 occupies the recess 26, to punch the air inlet opening 20 through the teat wall 12. In such embodiments, the drive system may, for example, drive the counter-surface 36, e.g. the counter-surface 36 included in the demolding tool 34, into (at least) a region of the teat wall 12 behind which the end of the implement 29 is located.

Alternatively or additionally, a release system may separate the molded teat wall 12 from at least part of the mold 30, 32, e.g. from the first part 30, after the air inlet opening 20 has been punched through the teat wall 12. In such embodiments, the release system may, for example, drive withdrawal of the molded teat 12 (in which the air inlet opening 20 has been punched) from the at least part of the mold 30, 32, e.g. from the first part 30 (referring again to the arrow A3 in FIG. 3D).

In such embodiments, the release system may, for example, drive retraction of the demolding tool 34, together with the molded (and punched) teat wall 12, away from the at least part of the mold 30, 32, e.g. away from the first part 30.

In embodiments in which the drive system and the release system are present, the drive system and the release system may make use of common actuation components (albeit operated in different ways, e.g. directions) to cause the teat wall 12 and the end of the implement 29 to be forced together, and then to separate the molded teat wall 12 from the at least part of the mold 30, 32.

The actuation components can, for example, include a motor system, a hydraulic system and/or a pneumatic system.

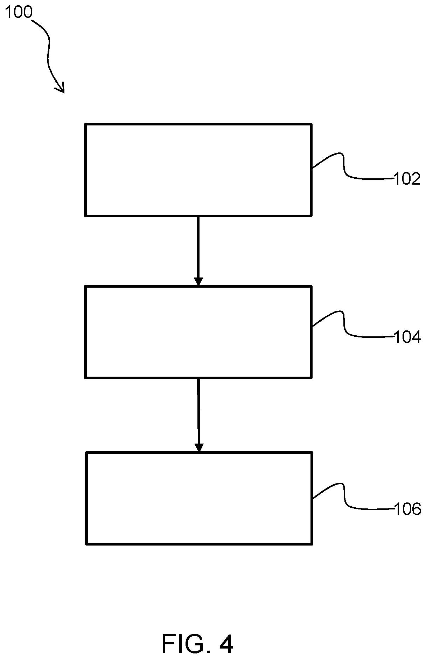

Referring also to the flowchart provided in FIG. 4, the present disclosure also relates to a method 100 for manufacturing the teat 10, with the method 100 comprising molding 102 the teat wall 12 using a mold 30, 32. As explained above, a recess 26 is defined in the teat wall 12 during the molding 102, with the recess 26 being at least partly delimited by a concavely curving surface 27. The implement 29 occupies the recess 26 so that an end of the implement 29 contacts the concavely curving surface 27, as shown in FIGs. 3A to 3C.

The method 100 further comprises forcing 104 the teat wall 12 and the end of the implement 29 together, while the implement 29 occupies the recess 26, to punch the air inlet opening 20 through the teat wall 12.

The method 100 may comprise separating 106 the teat wall 12 and at least part of the mold 30, 32 from each other after the air inlet opening 20 has been punched through the teat wall 12, as shown in FIG. 3D.

At least part of the method 100 can be implemented in an automated manner by a processor configured to control at least one of the dispensing system, the drive system, and the release system.

In some embodiments, the processor may control the dispensing system to dispense the material that forms the teat wall 12 in the mold 30, 32 during the molding 102.

Alternatively or additionally, the processor may control the drive system, e.g. the actuation component(s) thereof, to cause the teat wall 12 and the end of the implement 29 to be forced together, while the implement 29 occupies the recess 26 so that the end of the implement 29 contacts the concavely curving surface 27, to punch the air inlet opening 20 through the teat wall 12.

Alternatively or additionally, the processor may control the release system, e.g. the actuation component(s) thereof, to separate the molded teat wall 12 from at least part of the mold 30, 32, e.g. from the first part 30, after the air inlet opening 20 has been punched through the teat wall 12.

The present disclosure further relates to a teat fabrication apparatus for manufacturing the teat 10. The teat fabrication apparatus comprises the mold 30, 32 in which the teat wall 12 is moldable, with the mold 30, 32 being configured to define the recess 26 in the teat wall 12 during molding 102. The recess 26 is at least partly delimited by a concavely curving surface 27, as previously described. The teat fabrication apparatus, e.g. the mold 30, 32 thereof, comprises an implement 29 arranged to occupy the recess 26 so that an end of the implement 29 contacts the concavely curving surface 27. The implement 29 is configured to enable the air inlet opening 20 to be punched through the teat wall 12 by forcing, while the implement 29 occupies the recess 26, the teat wall 12 and the end of the implement 29 together.

In some embodiments, the teat fabrication apparatus comprises the drive system for forcing the teat wall 12 and the end of the implement 29 together, while the implement 29 occupies the recess 26 so that the end of the implement 29 contacts the concavely curving surface 27, to punch the air inlet opening 20 through the teat wall 12.

The drive system may be controllable by the processor to force the teat wall 12 and the end of the implement 29 together to punch the air inlet opening 20 through the teat wall 12.

Alternatively or additionally, the teat fabrication apparatus may comprise the dispensing system for dispensing the material that forms the teat wall 12 in the mold 30, 32 during molding of the teat wall 12. The dispensing system may be controllable by the processor to dispense the material that forms the teat wall 12 in the mold 30, 32 during molding of the teat wall 12.

Alternatively or additionally, the teat fabrication apparatus may comprise the release system for separating the molded teat wall 12 from at least part of the mold 30, 32 after the air inlet opening 20 has been punched through the teat wall 12. The release system may be controllable by the processor to separate the molded teat wall 12 from the at least part of the mold 30, 32 after the air inlet opening 20 has been punched through the teat wall 12.

The processor described in any of these embodiments of the teat fabrication apparatus can itself be included in the teat fabrication apparatus.

The present disclosure yet further relates to a computer program comprising computer-readable instructions executable to cause the processor to control the drive system to force 104 the teat wall 12 and the end of the implement 29 together, while the implement 29 occupies the recess 26 so that the end of the implement 29 contacts the concavely curving surface 27, to punch the air inlet opening 20 through the teat wall 12.

In some embodiments, the computer-readable instructions are executable to cause the processor to control the dispensing system to dispense the material that forms the teat wall 12 in the mold 30, 32 during molding 102 of the teat wall 12; and/or to control the release system to separate 106 the molded teat wall 12 from at least part of the mold 30, 32 after the air inlet opening 20 has been punched through the teat wall 12.

The present disclosure additionally provides a processor configured to execute the computer program according to any of the embodiments described herein.

The processor can be implemented in numerous ways, with software and/or hardware, to perform the various functions required. The processor may, for example, employ one or more microprocessors that may be programmed using software (e.g., microcode) to perform the required functions. The processor may however be implemented with or without employing a microprocessor, and also may be implemented as a combination of dedicated hardware to perform some functions and microprocessor(s) (e.g. one or more programmed microprocessors and associated circuitry) to perform other functions.

Examples of processor components that may be employed in various embodiments of the present disclosure include, but are not limited to, conventional microprocessors, application specific integrated circuits (ASICs), and field-programmable gate arrays (FPGAs).

In various implementations, a processor or processors may be associated with one or more storage media such as volatile and non-volatile computer memory such as RAM, PROM, EPROM, and EEPROM. The storage media may be encoded with one or more programs that, when executed on one or more processors, perform the required functions. Various storage media may be fixed within a processor or processors or may be transportable, such that the one or more programs stored thereon can be loaded into a processor or processors.

It is noted that a single processor or other unit, or multiple processors/other units, may fulfill the functions of several items recited in the claims and/or described in the description.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A method (100) for manufacturing a teat (10), the teat (10) comprising a teat wall (12) that comprises an interior surface (14) and an exterior surface (16), the interior surface (14) at least partly delimiting a teat volume (24) in which liquid is receivable, wherein the method (100) comprises:
molding (102) the teat wall (12) using a mold (30, 32), a recess (26) being defined in the teat wall (12) during the molding (102), the recess (26) being at least partly delimited by a concavely curving surface (27), wherein an implement (29) occupies the recess (26) so that an end of the implement (29) contacts the concavely curving surface (27); and
forcing (104) the teat wall (12) and the end of the implement (29) together, while the implement (29) occupies the recess (26), to punch an air inlet opening (20) through the teat wall (12).

2. The method (100) according to claim 1, wherein the implement (29) is included in the mold (30, 32), the recess (26) being formed by the implement (29) during the molding (102).

3. The method (100) according to claim 1 or claim 2, wherein the implement (29) comprises a convexly curving tip whose shape complements that of the concavely curving surface (27).

4. The method (100) according to any one of claims 1 to 3, wherein a radius of curvature of one or both of the end of the implement (29) and the concavely curving surface (27) is at least 0.05 mm.

5. The method (100) according to any one of claims 1 to 4, wherein a radius of curvature of one or both of the end of the implement (29) and the concavely curving surface (27) is 0.3 mm or less.

6. The method (100) according to any one of claims 1 to 5, wherein the forcing (104) comprises compressing the teat wall (12) between the end of the implement (29) and a counter-surface (36).

7. The method (100) according to any one of claims 1 to 6, comprising separating (106) the teat wall (12) and at least part of the mold (30, 32) from each other after the air inlet opening (20) has been punched through the teat wall (12).

8. The method (100) according to any one of claims 1 to 7, wherein the teat wall (12) comprises an elastomeric material.

9. The method (100) according to any one of claims 1 to 8, wherein a processor controls a drive system to cause the teat wall (12) and the end of the implement (29) to be forced together, while the implement (29) occupies the recess (26), to punch the air inlet opening (20) through the teat wall (12).

10. The method (100) according to claim 9, wherein the processor controls a dispensing system to dispense material that forms the teat wall (12) in the mold (30, 32) during the molding (102); and/or wherein the processor controls a release system to separate the molded teat wall (12) from at least part of the mold (30, 32) after the air inlet opening (20) has been punched through the teat wall (12).

11. A teat (10) obtainable by the method (100) according to any one of claims 1 to 10.

12. A computer program comprising computer-readable instructions executable to cause a processor to control a drive system to force (104) a teat wall (12) and an end of an implement (29) together, while the implement (29) occupies a recess (26) defined in the teat wall (12), to punch an air inlet opening (20) through the teat wall (12), the recess (26) being at least partly delimited by a concavely curving surface (27) that is contacted by the end of the implement (29) during the forcing (104).

13. The computer program according to claim 12, wherein the computer-readable instructions are executable to cause the processor to control a dispensing system to dispense material that forms the teat wall (12) in a mold (30, 32) during molding (102) of the teat wall (12); and/or to control a release system to separate the molded teat wall (12) from at least part of the mold (30, 32) after the air inlet opening (20) has been punched through the teat wall (12).

14. A processor configured to execute the computer program according to claim 12 or claim 13.

15. A teat fabrication apparatus for manufacturing a teat (10), the teat (10) comprising a teat wall (12) that comprises an interior surface (14) and an exterior surface (16), the interior surface (14) at least partly delimiting a teat volume (24) in which liquid is receivable, wherein the teat fabrication apparatus comprises:
a mold (30, 32) in which the teat wall (12) is moldable, the mold (30, 32) being configured to define a recess (26) in the teat wall (12) during molding, the recess (26) being at least partly delimited by a concavely curving surface (27); wherein an implement (29) is arranged to occupy the recess (26) so that an end of the implement (29) contacts the concavely curving surface (27), the implement (29) being configured to enable an air inlet opening (20) to be punched through the teat wall (12) by forcing, while the implement (29) occupies the recess (26), the teat wall (12) and the end of the implement (29) together.
